# EUROPÄISCHE PATENTSCHRIFT

(11) **EP 0 936 985 B1**
(45) Veröffentlichungstag und Bekanntmachung des Hinweises auf die Patenterteilung: **06.11.2002**
(21) Anmeldenummer: 98951355.1
(22) Anmeldetag: 04.09.1998
(51) Int. Cl.: B62D 1/04

(54) **LENKVORRICHTUNG MIT BETÄTIGUNGSRING**
STEERING DEVICE WITH AN ACTUATION RING
DISPOSITIF DE DIRECTION COMPORTANT UN ANNEAU D'ACTIONNEMENT

(30) Priorität: 06.09.1997 DE 19739105
(43) Veröffentlichungstag der Anmeldung: 25.08.1999
(73) Patentinhaber: TRW Automotive Safety Systems GmbH & Co. KG, 63743 Aschaffenburg (DE)
(72) Erfinder: NIGRIN, Anke, D-97816 Lohr (DE); TSCHÖP, Winfried, D-97892 Kreuzwertheim (DE); KREUZER, Martin, D-63839 Kleinwallstadt (DE); BOSSLER, Hans-Jürgen, D-64839 Münster (DE); RANDAU, Ulrich, D-78048 Villingen-Schwenningen (DE)
(74) Vertreter: Degwert, Hartmut, Dipl.-Phys.
(86) Internationale Anmeldenummer: EP9805640
(87) Internationale Veröffentlichungsnummer: WO99012791

(56) Entgegenhaltungen:
- DE-C- 19 634 102
- GB-A- 1 071 907

## Beschreibung

Die Erfinung betrifft eine Lenkvorrichtung für ein Kraftfahrzeug gemäß dem Oberbegriff von Anspruch 1.

Die bekannten Lenkvorrichtungen bestehen aus einem von Hand drehbaren Lenkrad, das von Anschlag zu Anschlag üblicherweise 3,5 bis 4,5 Umdrehungen gedreht werden kann und dessen Drehbewegung über ein Lenkgetriebe mechanisch direkt auf ein Lenkgestänge übertragen wird, das den Einschlag der gelenkten Räder bewirkt Derartige Lenkvorrichtungen sind seit Anfang der Automobilentwicklung in verschiedener Form im Einsatz, wobei bei Bussen und Lastkraftwagen außer einem größeren Durchmesser des Lenkrades auch mehr Umdrehungen von Anschlag bis Anschlag vorgesehen werden können, um die Übersetzungsverhältnisse zugunsten geringeren Kraftaufwands zu verbessern. Außerdem sind insbesondere bei vorderradangetriebenen Personenkraftwagen pneumatische Lenkhilfen als sogenannte Servolenkungen weit verbreitet

Die direkte mechanische Kopplung zwischen dem Lenkrad und den gelenkten Rädern hat allerdings auch verschiedene Nachteile. Zum einen läßt sich nicht gänzlich vermeiden, daß Fahrbahnunebenheiten trotz zwischengeschalteter Dämpfungseinrichtungen als mehr oder weniger starke Vibrationen bis in das Lenkrad durchschlagen, was nicht nur unkomfortabel ist, sondern bei längeren Fahrten auch zu einer stärkeren Ermüdung führt. Ein weiterer Nachteil besteht darin, daß man sich bei der Konzeption derartiger Lenkvorrichtungen von vornherein für ein bestimmtes Übersetzungsverhältnis entscheiden muß, bei dem der eine einen ungenügenden Fahrbahnkontakt moniert, während für den anderen das selbe Übersetzungsverhältnis noch zu kraftaufwendig ist. Außerdem können die unterschiedlichen Bedürfnisse bei Autobahn-Geradeausfahrt einerseits und beim Einparken andererseits bei den herkömmlichen Lenkvorrichtungen nicht oder nur mit beträchtlichem technischen Aufwand zufriedenstellend erfüllt werden.

Hinzu kommt, daß bei modernen Lenkrädern immer mehr Betätigungseinrichtungen so angeordnet werden, daß sie erreicht werden können, ohne daß die Hand vom Lenkrad genommen werden muß. Bei herkömmlichen Lenkvorrichtungen hängt die Zuverlässigkeit derartiger Betätigungen davon ab, daß die einzelnen Befehle sicher vom drehbaren Lenkrad auf feststehende Teile der Karosserie übertragen werden können. Auch hierfür gibt es zwar schon eine ganze Reihe bewährter technischer Lösungsmöglichkeiten, die jedoch alle einen Rest an Störanfälligkeit aufweisen und von denen viele bei einer deutlichen Erhöhung der am Lenkrad untergebrachten Betätigungseinrichtungen überlastet sind.

Aus der GB-A-1 071 907 ist eine Lenkvorrichtung gemäß dem Oberbegriff von Anspruch 1 mit einem Lenkradkörper bekannt, an dem ein ringförmiges Element verschiebbar gelagert ist. Die Bewegung des ringförmigen Elements wird mechanisch über ein Zahnrad und eine Welle auf ein Lenkgestänge übertragen.

Es besteht somit die Aufgabe, eine Lenkvorrichtung der eingangs genannten Art anzugeben, bei der die vorstehend genannten Nachteile nicht auftreten können, die leicht an die verschiedensten Anforderungen angepaßt werden kann und bei der am Betätigungsorgan ohne weiteres eine Mehrzahl von Hebeln und Tastern für die verschiedensten Zwecke angeordnet werden kann, ohne daß die Signalübertragung Schwierigkeiten bereitet.

Zur Lösung dieser Aufgabe wird eine gattungsmäßige Lenkvorrichtung vorgeschlagen, die dadurch gekennzeichnet ist, daß in dem Kranz des Lenkrads ein relativ zum Kranz beweglicher, bandförmiger oder kettenartiger Betätigungsring und ein Meßwertgeber zur Erzeugung eines elektrischen oder elektronischen Positionssignals für den Betätigungsring angeordnet sind, und daß das Lenkgestänge von einem Stellantrieb betätigt wird, der von einer elektrischen oder elektronischen Regeleinrichtung in Abhängigkeit von dem Positionssignal ansteuerbar ist.

Bei der erfindungsgemäßen Lenkvorrichtung wurde weiter der Betriff "Lenkrad" benutzt, obwohl das Betätigungsorgan nicht mehr drehbar ist. Im übrigen kann es aber noch weitgehend wie ein herkömmliches Lenkrad gestaltet werden. Wichtig ist die mechanische Entkopplung vom Lenkgestänge und die Übertragung der Lenkbefehle auf elektrischem oder elektronischem Wege. Dazu ist ein bandförmiger oder kettenartiger Betätigungsring vorgesehen, der relativ zum Kranz des Lenkrades beweglich ist. Mittels des Meßwertgebers wird ein elektrisches oder elektronisches Positionssignal für den Betätigungsring erzeugt, das in einer elektrischen oder elektronisches Regeleinrichtung in einen Ansteuerbefehl für einen auf das Lenkgetriebe wirkenden Stellantrieb umgewandelt wird.

Die erfindungsgemäße Lenkvorrichtung hat den Vorteil, daß in dem nicht drehbaren "Lenkrad" in üblicher Weise ein Airbag sowie Betätigungs- und Anzeigevorrichtungen untergebracht werden können, ohne daß eine Einrichtung zur Übertragung der Betätigungs- bzw. Anzeigesignale von einem feststehenden auf ein bewegliches Bauteil bzw. umgekehrt vorgesehen werden muß. Die erfindungsgemäße Lenkvorrichtung hat weiter den großen Vorteil, daß infolge der mechanischen Entkopplung auf sehr einfache Weise beliebige Übersetzungsverhältnisse realisiert werden können, weil insoweit nur in die Software der elektronischen Regeleinrichtung eingegriffen werden muß. Außerdem ist es ohne weiteres möglich, für die Autobahn-Geradeausfahrt ein sehr direktes Übersetzungsverhältnis zu wählen und für den Einparkbetrieb den entgegengesetzten Auslegungsbereich vorzusehen.

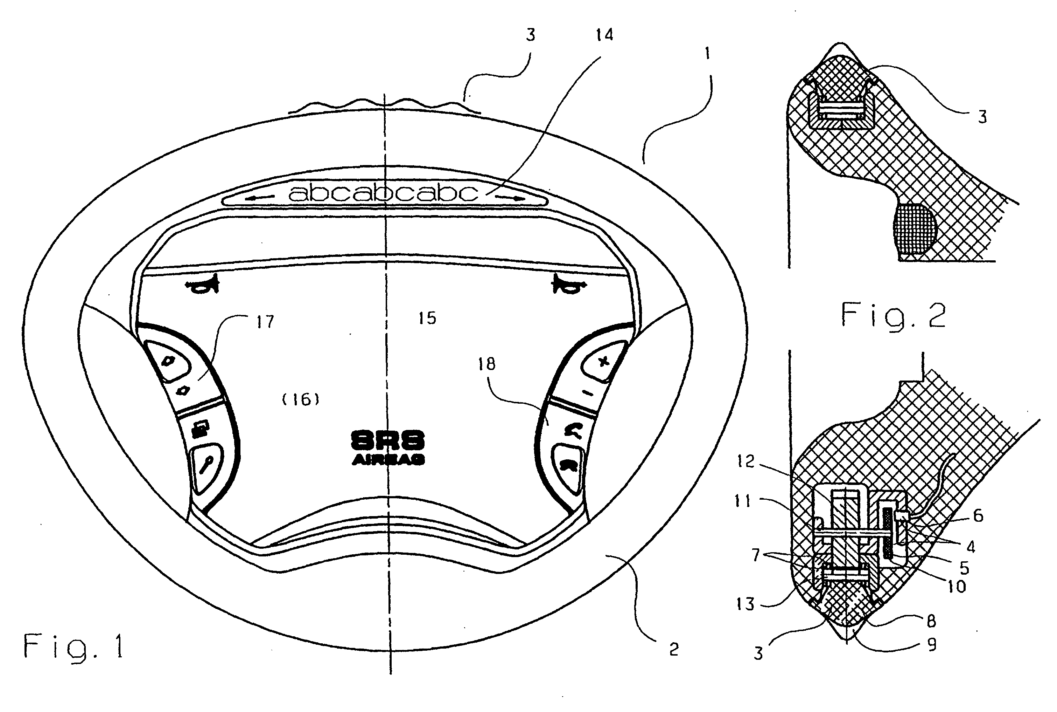

Zweckmäßige Ausgestaltungen des Erfindungsgedankens sind in den Unteransprüchen 2 bis 7 beschrieben. Weitere Einzelheiten werden anhand des in den Figuren 1 und 2 dargestellten Ausführungsbeispielen näher erläutert. Es zeigen:
- Fig. 1: eine Draufsicht auf eine Ausführungsform der erfindungsgemäßen Lenkvorrichtung.
- Fig. 2: einen Teilschnitt durch die Lenkvorrichtung gemäß Fig. 1.

In Fig. 1 ist ein von der herkömmlichen Form abweichendes, ovales, nicht drehbares "Lenkrad" 1 dargestellt, mit einem Zentralteil 15, in dem in an sich bekannter Weise ein Airbag 16 sowie verschiedene Taster und Betätigungsvorrichtungen 17, 18 untergebracht sind. Außerdem ist noch eine Anzeigevorrichtung 14 vorgesehen, die dem Fahrer die Position des Betätigungsrings 3 angibt. Der im Kranz 2 untergebrachte Betätigungsring 3 ist in Fig. 1 nur angedeutet; Einzelheiten hierzu sind aus Fig. 2 ersichtlich.

In diesem Teilschnitt sind im wesentlichen nur die Bereiche des Lenkradkranzes 2 dargestellt, wobei der Betätigungsring 3 aus einer Gliederkette 7 und einem damit drehfest verbundenen Riemen 8 mit außenliegendem Griffprofil 9 besteht. Der Betätigungsring 3 ist im Kranz 2 des "Lenkrades" 1 verschieblich gelagert, wobei der Fahrer durch eine Verschiebung des Betätigungsringes 3 relativ zum Kranz 2 des feststehenden "Lenkrades" 1 eine Lenkbewegung vorgeben kann, die von einem Meßwertgeber 4 zur Erzeugung eines Positionssignals ausgewertet werden kann. Der Meßwertgeber 4 kann entweder aus einem sich mit dem Betätigungsring drehenden Strichcodeträger 5 und einer ortsfesten Lesevorrichtung bestehen oder aber, wie in Fig. 2 dargestellt, aus einer kleinen, drehbaren Scheibe 10 mit Strichcode und einer ortsfesten Lesevorrichtung, wobei die Scheibe 10 drehfest auf einer Welle 11 mit Zahnrad 12 angeordnet ist, dessen Zähne in Mitnehmer 13 der Gliederkette 7 eingreifen. Auf diese Weise kann ein umkehrbar eindeutiges Positionssignal erzeugt werden, das von einer elektrischen oder elektronischen Regeleinrichtung in ein Ansteuersignal für den nicht dargestellten Stellantrieb zur Betätigung des Lenkgestänges umgewandelt werden kann.

Es dürfte in diesem Zusammenhang selbstverständlich sein, daß nicht nur ein quasi statisches Positionssignal erzeugt wird, sondern daß die dynamische Bewegung des Betätigungsringes zu entsprechenden dynamischen Ansteuerbefehlen für den Stellantrieb führt, so daß die Lenkvorgaben unmittelbar "per Draht" auf die lenkbaren Räder übertragen werden.

Außer den bereits geschilderten Vorteilen können bei der Realisierung des Erfindungsgedankens noch erhebliche Gewichtsvorteile realisiert werden, weil das "Lenkrad" nicht mehr für die Übertragung mechanischer Kräfte ausgelegt werden muß und weil bisher erforderliche Bauteile für die mechanische Übertragung der Lenkbewegung entfallen können. Außerdem kann das "Lenkrad" freizügiger und für das Ein- und Aussteigen leichter verschieblich angeordnet werden, weil insoweit keine mechanisch konstruktiven Vorgaben für die Kraftübertragung zu beachten sind. Schließlich kann das Lenkrad auch im Hinblick auf die Komfortbedürfnisse freizügiger gestaltet werden, weil es nicht mehr kreisrund sein muß.

## Patentansprüche

1. Lenkvorrichtung für ein Kraftfahrzeug mit einem Betätigungsorgan zur Einleitung einer Lenkbewegung und einem Lenkgestänge zur Übertragung der Lenkbewegung auf die Räder, wobei das Betätigungsorgan aus einem nicht drehbaren Lenkrad (1) mit einem Kranz und einem relativ zum Kranz (2) beweglichen bandförmigen oder kettenartigen Betätigungsring (3) besteht, **dadurch gekennzeichnet, daß** der Betätigungsring (3) in dem Kranz (2) des Lenkrads (1) angeordnet ist und ein Meßwertgeber (4) zur Erzeugung eines elektrischen oder elektronischen Positionssignals für den Betätigungsring (3) angeordnet sind, und daß das Lenkgestänge von einem Stellantrieb betätigt wird, der von einer elektrischen oder elektronischen Regeleinrichtung in Abhängigkeit von dem Positionssignal ansteuerbar ist.

2. Lenkvorrichtung nach Anspruch 1, **dadurch gekennzeichnet, daß** der Meßwertgeber (4) zur Erzeugung des Positionssignals aus einem sich mit dem Betätigungsring (3) drehenden Strichcodeträger (5) und einer ortsfesten Lesevorrichtung für den Strichcode besteht.

3. Lenkvorrichtung nach Anspruch 1 oder 2, **dadurch gekennzeichnet, daß** der Betätigungsring (3) aus einer Gliederkette (7) und einem damit drehfest verbundenen Riemen (8) mit außenliegendem Griffprofil (9) besteht.

4. Lenkvorrichtung nach Anspruch 3, **dadurch gekennzeichnet, daß** der Meßwertgeber (4) zur Erzeugung des Positionssignals aus einer kleinen, drehbaren Scheibe (10) mit Strichcode und einer ortsfesten Lesevorrichtung (6) besteht, wobei die Scheibe (10) drehfest auf einer Welle (11) mit Zahnrad (12) angeordnet ist, dessen Zähne in Mitnehmer (13) der Gliederkette (7) eingreifen.

5. Lenkvorrichtung nach einem der Ansprüche 1 bis 4, **dadurch gekennzeichnet, daß** im "Lenkrad" (1) eine Anzeigevorrichtung (14) vorgesehen ist, die dem Fahrer die Position des Betätigungsrings (3) angibt.

6. Lenkvorrichtung nach einem der Ansprüche 1 bis 5, **dadurch gekennzeichnet, daß** das Positionssignal in der Regeleinrichtung derart verarbeitbar ist, daß der Ansteuerbefehl für den Stellantrieb in Abhängigkeit vom "Lenkradeinschlag" mehr oder weniger von einer direkten, proportionalen "Übersetzung" abweicht.

7. Lenkradvorrichtung nach einem der Ansprüche 1 bis 6, **dadurch gekennzeichnet, daß** das "Lenkrad" (1) einen Zentralteil (15) aufweist, in dem ein Airbag (16) sowie Taster und Betätigungsvorrichtungen (17 - 18) untergebracht sind.

## Claims

1. A steering device for a motor vehicle with an actuating member to initiate a steering movement and with a steering linkage to transfer the steering movement to the wheels, the actuating member consisting of a non-rotatable steering wheel (1) having a rim and a band-shaped or chain-like actuating ring (3) movable relative to the rim (2), **characterized in that** the actuating ring (3) is arranged in the rim (2) of the steering wheel (I) and a measured value transmitter (4) to generate an electrical or electronic position signal for the actuating ring (3) is arranged, and that the steering linkage is actuated by an actuating drive, which is drivable by an electrical or electronic closed-loop control device in response to the position signal.

2. The steering device according to Claim 1, **characterized in that** the measured value transmitter (4) to generate the position signal consists of a bar code carrier (5) rotating with the actuating ring (3) and of a stationary reading device for the bar code.

3. The steering device according to Claim 1 or 2, **characterized in that** the actuating ring (3) consists of a link chain (7) and of a belt (8) connected in non-rotational relationship therewith and having an external grip profile (9).

4. The steering device according to Claim 3, **characterized in that** the measured value transmitter (4) to generate the position signal consists of a small, rotatable disc (10) with a bar code and of a stationary reading device (6), the disc (10) being arranged on a shaft (11) for joint rotation therewith, the shaft (11) having a cogwheel (12) the teeth of which engage in carriers (13) of the link chain (7).

5. The steering device according to any of Claims 1 to 4, **characterized in that** in the "steering wheel" (1) a display device (14) is provided, which indicates to the driver the position of the actuating ring (3).

6. The steering device according to any of Claims 1 to 5, **characterized in that** the position signal is processable in the closed-loop control device such that the driving command for the actuating drive deviates more or less from a direct, proportional "transmission" as a function of the "steering wheel turning angle".

7. The steering device according to any of Claims 1 to 6, **characterized in that** the "steering wheel" (1) has a central part (15), in which an airbag (16) and also keys and actuating devices (17 - 18) are accommodated.

## Revendications

1. Dispositif de direction pour un véhicule, comportant un organe d'actionnement pour déclencher un mouvement de direction, et une tringlerie de direction pour transmettre le mouvement de direction aux roues, l'organe d'actionnement étant constitué par un volant (1) non rotatif avec une couronne et un anneau d'actionnement (3) en forme de ruban ou de chaîne, mobile par rapport à la couronne (2), **caractérisé en ce que** dans la couronne (2) du volant (1) est agencé l'anneau d'actionnement (3) et un capteur de mesure (4) est agencé pour engendrer un signal de position électrique ou électronique pour l'anneau d'actionnement (3), et **en ce que** la tringlerie de direction est actionnée par un mécanisme d'entraînement qui peut être piloté par un dispositif de régulation électrique ou électronique en fonction du signal de position.

2. Dispositif de direction selon la revendication 1, **caractérisé en ce que** le capteur de mesure (4) pour engendrer le signal de position est constitué par un support de code barre (5) tournant avec l'anneau d'actionnement (3) et un dispositif de lecture stationnaire pour le code barre.

3. Dispositif de direction selon la revendication 1 ou 2, **caractérisé en ce que** l'anneau d'actionnement (3) est constitué par une chaîne à maillons (7) et par une courroie (8) reliée solidaire en rotation avec un profil de maniement (9) situé à l'extérieur.

4. Dispositif de direction selon la revendication 3, **caractérisé en ce que** le capteur de mesure (4) pour engendrer le signal de position est constitué par un petit disque (10) rotatif avec code barre et par un dispositif de lecture (6) stationnaire, le disque (10) étant agencé solidaire en rotation sur un arbre (11) avec une roue dentée (12), dont les dents s'engagent dans des tenons d'entraînement (13) de la chaîne à maillons.

5. Dispositif de direction selon l'une des revendications 1 à 4, **caractérisé en ce que** dans le "volant de direction " (1) est prévu un dispositif d'affichage (14) qui indique au conducteur la position de l'anneau d'actionnement (3).

6. Dispositif de direction selon l'une des revendications 1 à 5, **caractérisé en ce que** le signal de position dans le dispositif de régulation peut être traité de telle sorte que l'ordre de pilotage pour le mécanisme d'entraînement s'écarte plus ou moins d'une "transmission" directe proportionnelle, en fonction de "l'angle de rotation du volant".

7. Dispositif de direction selon l'une des revendications 1 à 6, **caractérisé en ce que** le "volant de direction "(1) présente une partie centrale (15) dans laquelle sont logés un coussin à gaz (16) ainsi que des touches et des dispositifs d'actionnement (17-18).
